# EUROPÄISCHE PATENTANMELDUNG

(11) **EP 2 796 201 A2**
(43) Veröffentlichungstag der Anmeldung: **29.10.2014**
(21) Anmeldenummer: 14162364.5
(22) Anmeldetag: 28.03.2014
(51) Int. Cl.: B01L 3/00, G01N 1/28, B01D 21/00, G01N 1/40

(54) **Sedimentationsvorrichtung, insbesondere für Partikel, sowie Kartusche**

(30) Priorität: 22.04.2013 DE 102013207232
(71) Anmelder: ROBERT BOSCH GMBH, 70442 Stuttgart (DE)
(72) Erfinder: Hoehl, Melanie, 71254 Ditzingen (DE); Daub, Martina, 71287 Weissach (DE); Steigert, Juergen, 70176 Stuttgart (DE)

(57) **Zusammenfassung**

Die vorliegende Erfindung schafft eine Sedimentationsvorrichtung (100), insbesondere für Partikel, welche mit einer Kartusche mit einer Längsachse koppelbar ist, mit einem Zulauf (10), einer Sedimentationskammer (20), welche mit dem Zulauf (10) gekoppelt ist und ein Sedimentationsmittel (30) aufweist, welches in Bezug auf die Längsachse der Kartusche zumindest abschnittsweise um einen vorbestimmten Winkel geneigt ist, und einem Ablauf (40), welcher mit der Sedimentationskammer (20) gekoppelt ist.

## Beschreibung

### Stand der Technik

Die Durchführung biochemischer Prozesse basiert insbesondere auf der Handhabung von Flüssigkeiten. Typischerweise wird diese Handhabung manuell mit Hilfsmitteln wie Pipetten, Reaktionsgefäßen, aktiven Sondenoberflächen oder Laborgeräten durchgeführt. Durch Pipettierroboter oder Spezialgeräte sind diese Prozesse zum Teil bereits automatisiert.

Lab-on-a-Chip-Systeme (auch als Westentaschenlabor oder Chiplabor bezeichnet) bringen die gesamte Funktionalität eines makroskopischen Labors auf einem nur plastikkartengroßen Kunststoffsubstrat unter. Lab-on-a-Chip-Systeme bestehen typischerweise aus zwei Hauptkomponenten. Ein Testträger beinhaltet Strukturen und Mechanismen für die Umsetzung der fluidischen Grundoperationen (zum Beispiel ein Mischer), welche aus passiven Komponenten, wie Kanälen, Reaktionskammern und vorgelagerten Reagenzien, oder auch aktiven Komponenten wie Ventilen oder Pumpen bestehen können. Die zweite Hauptkomponente sind Aktuations-, Detektions- und Steuereinheiten. Solche Systeme ermöglichen es, biochemische Prozesse vollautomatisiert durchzuführen.

Ein Lab-on-a-Chip-System ist beispielsweise in der Druckschrift DE 10 2010 003 223 A1 beschrieben. In diesem System werden Revolver im Format eines Standard-Zentrifugenröhrchens axial übereinander angeordnet und können somit in eine Zentrifuge eingesetzt werden. Die Revolver beinhalten Kanäle, Reaktionskammern und weitere Strukturen für die Durchführung von fluidischen Einheitsoperationen. Über eine integrierte Kugelschreibermechanik können die Revolver bezüglich ihrer Positionen zueinander rotiert werden, wobei sich Kavitäten zueinander schalten lassen. Die Aktuation erfolgt über die Änderung der Drehzahl der Zentrifuge und damit der Zentrifugalkraft, welche auf das Mikrofluidiksystem wirkt und die Kugelschreibermechanik aktuiert. Die Flüssigkeiten werden entlang dem Kraftvektor der Zentrifugalkraft vom radial innenliegenden Punkten zum radial außenliegenden Punkten transportiert.

Die Aufbereitung von Proben ist in der Regel der erste Schritt vieler bioanalytischer Protokolle an realen Proben, wie beispielsweise Blut, Lebensmitteln oder Umweltproben. Dabei wird häufig eine spezielle Spezies von Biomolekülen aus einem Gemisch von anderen Molekülen und Teilchenbestandteilen isoliert und in einen neuen Puffer überführt. Das Trennen von Partikeln aus Suspensionen mittels Zentrifugen stellt ein etabliertes Standardverfahren in Laboranalysen dar. Die Funktionsweise wird im Folgenden genauer erklärt.

Zentrifugen nutzen die Massenträgheit im Zentrifugiergutraum zur Stofftrennung. Partikel oder Medien mit höherer Dichte wandern aufgrund der höheren Trägheit nach außen. Dabei verdrängen sie die Bestandteile mit niedrigerer Dichte, welche hierdurch zur Mitte hin gelangen. Der Prozess ist gegenüber der Sedimentation durch die Schwerkraft wesentlich schneller oder wird überhaupt erst möglich - Gegenkräfte wie die Adhäsion, die thermische Molekularbewegung oder die Viskosität werden überwunden. Die vertikale Sedimentationsgeschwindigkeit ist hierbei abhängig von
- der Winkelgeschwindigkeit des Rotors
- dem Abstand des Maximums des Konzentrationsgradienten vom Rotorzentrum (Die Beschleunigung a ist von der Masse bzw. Dichte der Stoffe unabhängig; die Stofftrennung erfolgt aufgrund der Dichteunterschiede)
- den Moleküleigenschaften
- der Dichte des Lösungsmittels
- der Viskosität des Lösungsmittels.

Partikel in Suspension, etwa der zelluläre Anteil des Bluts, sedimentieren also wie oben beschrieben unter Einfluss des zentrifugalen Schwerefelds gemäß ihrer Dichteverteilung. Die Partikelsuspension, beispielsweise das Blut, wird dabei in ein rotierendes Reservoir eingebracht, das um einen Drehmittelpunkt rotierbar ist. Während einer Rotation bildet sich ein Stapel aus drei Phasen in dem Reservoir. Radial innenliegend bildet sich ein partikelfreier Flüssigkeitsüberstand, während sich am radial äußeren Rand eine Phase sedimentierter Partikel aufgrund ihrer gegenüber der Flüssigkeit erhöhten Massedichte bildet. Bei der Sedimentation stellt diese äußere Phase hauptsächlich ein aus Zellen bestehendes Sediment von dichteren, zellulären Blutbestandteilen dar. Zwischen dem partikelfreien Überstand und dem Sediment befindet sich anfänglich noch eine Phase, die aus Partikeln in Suspension besteht. Nach einer gewissen Zeit geht die Phase mit ihrem flüssigen Anteil in den partikelfreien Überstand und mit ihrem Teilchenanteil in das Sediment über. Der vollständige Übergang ist nach einer Zeit t erreicht, wobei zu diesem Zeitpunkt eine Gleichgewichtszustand dahingehend vorliegt, dass Partikel und Lösung, bis auf einige Flüssigkeitsreste in den Räumen zwischen den Sedimentpartikeln, weitestgehend voneinander getrennt sind.

### Vorteile der Erfindung

Die in dem Patentanspruch 1 definierte Sedimentationsvorrichtung, sowie die in dem Patentanspruch 13 definierte Kartusche weisen gegenüber herkömmlichen Lösungen den Vorteil auf, dass aufgrund der in Bezug auf die Längsachse einer Kartusche um einen vorbestimmten Winkel geneigten Gestaltung des Sedimentationsmittels für die Sedimentationsvorrichtung in vorteilhafter Weise Material und Einbauraum eingespart werden können und gleichzeitig eine damit verbundene Effizienzsteigerung des gesamten Systems realisiert werden kann. Alternativ dazu kann bei gleichbleibendem Material und Einbauraum die Effizienz des Prozesses gesteigert werden. Dadurch kann eine kürzere Zentrifugationszeit erreicht oder niedrigere Zentrifugationsgeschwindigkeiten eingesetzt werden.

Des Weiteren können der Winkel und die Oberflächengröße des Sedimentationsmittels so gewählt sein, dass die zugehörige benötigte Zentrifugationsgeschwindigkeit nicht mit dem restlichen Zentrifugationsprotokoll der Kartusche interferiert, wodurch sichergestellt ist, dass es zu keiner unbeabsichtigten Wechselwirkung zwischen den Prozessen in den anderen Trommeln während des Schrittes der Zentrifugation der Substanz in der Sedimentationsvorrichtung kommt. Zusätzlich dazu erfolgt bei der vorliegenden Sedimentationsvorrichtung die Separation in nur einem einzigen Prozessschritt, so dass die Handhabung durch den Anwender und die Bedienung der Kartusche wesentlich vereinfacht werden.

Die vorliegende Erfindung macht sich in vorteilhafter Weise den Umstand zu Nutze, dass die Separationseffizienz erhöht werden kann, indem man geneigte Wände zur Zentrifugation nutzt. Dieser Effekt wird ,Boycott Effekt' genannt. Wenn Oberflächen-Volumenverhältnisse vergrößert sind, beispielsweise bei einer Zentrifugation an geneigten anstatt von horizontalen Kanälen, kommen sich die fallenden und steigenden Partikel nicht in die Quere und behindern somit weniger den Prozess der Separation. Die Partikel haben in einem geneigten Kanal mehr Platz und deshalb erfolgen wesentlicher weniger Kollisionen und gegenseitige Behinderungen von Partikeln mit unterschiedlicher Größe als in einem horizontalen Kanal. Je konzentrierter die sich trennenden Schichten werden, desto dichter und schwerer werden sie. Daraus ergibt sich eine größere Kraft, die nach unten wirkt. Die Partikel rutschen also an der geneigten Wand herunter und die klare, zentrifugierte Flüssigkeit fließt deshalb mit weniger Widerstand nach oben als in einem horizontalen Kanal. Dies liegt daran, dass die Partikel dichter sind und die Flüssigkeit im geneigten Kanal einen kürzeren Weg zurücklegen muss. Die Separation von Partikeln und Flüssigkeit ist also bei dem vorliegenden Separationsprozess voneinander getrennt.

Das vorliegende zumindest abschnittsweise um einen vorbestimmten Winkel geneigte Sedimentationsmittel beschreibt ein Element, welches mittels der Sedimentationsvorrichtung mit einer Kartusche mit einer Längsachse koppelbar ist, und welches in Bezug auf die Längsachse der Kartusche zumindest abschnittsweise um einen vorbestimmten Winkel geneigt ist. Der vorbestimmte Winkel beträgt zwischen 15 und 80 Grad, besonders bevorzugt zwischen 20 und 70 Grad.

Die vorliegende Sedimentationsvorrichtung kann in vorteilhafter Weise bei einer konstanten Zentrifugen-Drehzahl betrieben werden und benötigt nicht zwangsweise ein zeitlich veränderbares Dreh-Profil. Des Weiteren ist es bei der vorliegenden Sedimentationsvorrichtung nicht erforderlich, dass die Sedimentationskammer (im Betrieb der Sedimentationsvorrichtung) ein bewegliches Bauteil ist.

In der vorliegenden Sedimentationsvorrichtung kann mit Hilfe einer gezielten Wahl von Parametern, wie beispielsweise der Zentrifugationsgeschwindigkeit, die Zentrifugationszeit, sowie die Stoffeigenschaften der aufzureinigenden Substanz(en) und der Vorrichtung, etc. die Effizienz des Sedimentationsprozess spezifisch verändert werden.

Aus den Unteransprüchen ergeben sich vorteilhafte Ausgestaltungen der Erfindung.

Gemäß einer weiteren Ausgestaltung der erfindungsgemäßen Sedimentationsvorrichtung ist das Sedimentationsmittel in der Art eines geneigten Kanals und/oder einer geneigten Ebene ausgebildet. Die Separationseffizienz der Probe wird dabei von der Länge und dem Winkel der Separationsebene bestimmt. Es sind auch abschnittsweise Gestaltungen des Sedimentationsmittels möglich, bei denen ein erster Abschnitt des Sedimentationsmittels in der Art eines geneigten Strömungskanals und ein zweiter Abschnitt des Sedimentationsmittels in der Art einer geneigten Ebene ausgebildet sind. In Abhängigkeit von der gewählten Gestaltung des Sedimentationsmittels kann die damit verbundene Erhöhung der Separationseffizienz zum schnelleren Ablaufen der Separationen oder zur Nutzung niedrigerer Drehzahlen bei gleicher Separationsgeschwindigkeit genutzt werden. Das erfindungsgemäße Prinzip kann auch dazu genutzt werden, um bei gleicher Separationseffizienz mit kürzeren Strömungskanälen auszukommen und somit Platz zu sparen. Das Sedimentationsmittel in der Art eines geneigten Kanals und/oder einer geneigten Ebene ist wiederum in Bezug auf die Längsachse der Kartusche zumindest abschnittsweise um einen vorbestimmten Winkel geneigt, wobei dieser zwischen 15 und 80 Grad beträgt, besonders bevorzugt zwischen 20 und 70 Grad beträgt.

Gemäß einer weiteren Ausgestaltung der erfindungsgemäßen Sedimentationsvorrichtung ist das Sedimentationsmittel in der Art einer Spirale ausgebildet. Zur Führung einer Substanz weist das Sedimentationsmittel Abschnitte auf, welche abschnittsweise in der Form einer geneigten Ebene und/oder eines Strömungskanals ausgebildet sein können. Das Sedimentationsmittel in der Art eines geneigten Strömungskanals und/oder einer geneigten Ebene ist wiederum in Bezug auf die Längsachse der Kartusche zumindest abschnittsweise um einen vorbestimmten Winkel geneigt, wobei dieser zwischen 15 und 80 Grad beträgt, besonders bevorzugt zwischen 20 und 70 Grad beträgt. Des Weiteren können auch mehrere Spiralen als Sedimentationsmittel vorgesehen sein. Eine/mehrere Spirale(n) kann/können jeweils ortsfest mit der Sedimentationskammer verbunden sein, in einer weiteren Ausgestaltung kann/können die Spirale(n) im Betrieb der Sedimentationsvorrichtung auch beweglich im Hinblick auf die Sedimentationskammer sein. Alternativ dazu kann das Sedimentationsmittel auch in der Art einer geneigten Schraube ausgebildet sein, wobei zumindest ein Element des Sedimentationsmittels eine (abschnittsweise) geneigte Fläche bzw. ein Strömungskanal oder eine (abschnittsweise) geneigte Ebene sein kann.

Gemäß einer weiteren Ausgestaltung der erfindungsgemäßen Sedimentationsvorrichtung ist das Sedimentationsmittel beweglich mit der Sedimentationskammer gekoppelt.

Dadurch kann das Sedimentationsmittel beispielsweise über die

Zentrifugalgeschwindigkeit oder/und -richtung gezielt geschaltet und gesteuert werden, wobei sich der Neigungswinkel des Sedimentationsmittels entsprechend zu der Drehzahl bzw. der Zentrifugalgeschwindigkeit oder/und -richtung ändert. Auf diese Weise kann die Separationseffizienz mit Hilfe der Zentrifugalbeschleunigung verändert werden, der Zu- und/oder Ablauf gezielt geöffnet und geschlossen werden oder andere Parameter gezielt geschaltet und gesteuert werden und damit Systemparameter (wie beispielsweise die Separationseffizienz, -dauer, der Startzeitpunkt, die Abflusszeitpunkt, etc.) gezielt verändert werden. Bewegliche Bauteile stellen daher generell einen weiteren Steuerparameter dar. Alternativ dazu können das Sedimentationsmittel und/oder der Zu- bzw. Ablauf in Bezug auf die Sedimentationskammer fest und unbeweglich sein.

Gemäß einer weiteren Ausgestaltung der erfindungsgemäßen Sedimentationsvorrichtung weist die Sedimentationskammer in Abhängigkeit von der Drehzahl der Sedimentationsvorrichtung eine bestimmte Anordnung auf. Hierbei kann zum Beispiel die Sedimentationskammer in Abhängigkeit von einer ersten Drehzahl eine erste Orientierung aufweisen, während sie bei einer zweiten Drehzahl eine zweite Orientierung aufweist. Dadurch lassen sich zum Beispiel in Abhängigkeit von der Drehzahl der Sedimentationsvorrichtung unterschiedliche Neigungen bzw. Orientierungen der Sedimentationskammer bzw. des darin angeordneten Sedimentationsmittels realisieren.

Gemäß einer weiteren Ausgestaltung der erfindungsgemäßen Sedimentationsvorrichtung erfolgt das Zuführen, Abtrennen und Ausführen von Substanzen aus der Sedimentationskammer jeweils mittels Zentrifugalkraft. Dies erlaubt durch eine Veränderung von zentrifugationsbezogener Parameter, wie zum Beispiel die Zentrifugationsgeschwindigkeit, die Drehrichtung, sowie weiterer Parameter in Verbindung mit der Zentrifugation, beispielsweise die Geometrie der Sedimentationsvorrichtung, die räumliche Anordnung und Beschaffenheit des Materials und der aufzureinigenden Substanz (zum Beispiel Viskosität, Partikelgröße, etc.) usw. eine gezielte Änderung der Separationsgeschwindigkeit und Effizienz des Prozesses.

Gemäß einer weiteren Ausgestaltung der erfindungsgemäßen Sedimentationsvorrichtung ist der Ablauf mit einem Siphon oder mit einem Überlaufkanal gekoppelt. Dabei kann das Sedimentationsmittel oder der Ablauf in ein Siphon münden, welches ein bestimmtes Flüssigkeitsvolumen abtrennt. Zudem kann das Sedimentationsmittel oder der Ablauf mit einem Auffanggefäß fluidisch verbunden sein, welches wiederum mit einem Siphon verbunden ist, sodass vorbestimmte Volumen einer Substanz oder Flüssigkeit mit der Sedimentationsvorrichtung abgetrennt werden können. Anstelle eines Siphons kann alternativ auch ein normales Auffanggefäß oder ein Überlaufgefäß verwendet werden, welches mit dem Sedimentationsmittel oder dem Ablauf fluidisch verbunden ist.

Gemäß einer weiteren Ausgestaltung der erfindungsgemäßen Sedimentationsvorrichtung ist der Ablauf in der Art eines gebogenen Kanals ausgebildet, dessen eines Ende in die Sedimentationskammer hineinragt und dessen freies Ende außerhalb der Sedimentationskammer angeordnet ist. Bei diesem Ausführungsbeispiel saugt die zentrifugal getriebene Strömung am Ablauf so lange an der Sedimentationskammer, wie der Füllstand im Ablauf radial weiter außen als der Füllstand der Sedimentationskammer liegt und wie kein Umgebungsgas an die Strömung im Ablaufbereich gelangen kann. Dieses Absaugen kann die abgeleitete Flüssigkeitsmenge wesentlich beeinflussen und kann reproduzierbar erfolgen. Eine solche Konfiguration für den Ablauf der vorliegenden Sedimentationsvorrichtung ist insbesondere für den Fall vorteilhaft, wenn mehrere Sedimentationskammer in einer Trommel oder einem Behälter eines 3D LoCs vorhanden sind. Diese sind dann zum Beispiel seitlich oberhalb ihres Bodens mit einem radial nach außen verlaufenden Zulauf verbunden, welcher über seine Drehfrequenz und seine radiale Steigung sowie seine Länge und seinen Querschnitt die radial nach innen gerichtete Wandergeschwindigkeit der Gesamtfüllstandshöhe in der Sedimentationskammer bestimmt. Der Ablauf ist zum Beispiel auf der dem Zulauf gegenüberliegenden Seite oberhalb des Bodens der vorherigen Sedimentationskammer mit der nachfolgenden Sedimentationskammer verbunden und fällt hinter einem radialen Minimum desselben radial ab, wobei aus demselben ein definierter Volumenteil des partikelfreien Überstandes abläuft, beispielsweise in nachgeschaltete Strukturen. Vorzugsweise ist die radiale Wandergeschwindigkeit der Gesamtfüllstandshöhe in Bezug auf die radiale Position und die Geometrie des Ablaufs so stark gedrosselt, dass zu keinem Zeitpunkt suspendierte Partikel in den Ablauf gelangen. Alternativ kann in dem Bereich, in dem der Ablauf in die Sedimentationskammer mündet, ein Zugang zum Umgebungsgas vorgesehen sein, so dass ein Saugen aus der Sedimentationskammer nach Beendigung einer Suspensionszuführung nicht stattfindet.

Gemäß einer weiteren Ausgestaltung der erfindungsgemäßen Sedimentationsvorrichtung ist der Ablauf in der Art eines verformbaren Schlauchs ausgebildet, welcher in Abhängigkeit von der Drehzahl der Sedimentationsvorrichtung in Richtung zu unterschiedlichen Kammern gerichtet ist, welche außerhalb der Sedimentationskammer angeordnet sind. Dadurch ist es mit Hilfe eines mechanischen Elements, hier des verformbaren Schlauchs, auf einfache Weise möglich eine Verteilung der separierten Substanz über den Ablauf in unterschiedliche Kammern zu leiten, so dass auf den Einsatz von herkömmlichen, wesentlich aufwändigeren, Stellelementen zur Steuerung des Fluss von Substanzen aus der Sedimentationskammer in der stromabwärtigen Richtung des Ablaufs verzichtet werden kann.

Gemäß einer weiteren Ausgestaltung der erfindungsgemäßen Sedimentationsvorrichtung sind der Zulauf und/oder der Ablauf jeweils in der Art von mehreren Kanälen ausgebildet. Somit können beispielsweise mehrere Substanzen der Sedimentationskammer zugeführt werden, welche zuvor getrennt gelagert werden. Des Weiteren können bei der Ausbildung von mehreren Kanälen im Ablauf unterschiedliche abgetrennte Phasen einer Substanz gezielt entnommen werden und mittels der Kanäle wiederum unterschiedlichen Behältnissen für die weitere Verarbeitung bereitgestellt werden. Außerdem können die Sedimentationskammer und der Zulauf bzw. Ablauf verschiedene Geometrien annehmen, wobei in einem Kanal des Zu- bzw. Ablaufs mit Richtungswechseln (zum Beispiel in horizontaler, vertikaler Richtung und/oder entlang einer geneigten Ebene etc.) oder veränderbare Querschnitte dazu genutzt werden können, um Oberflächen-Nolumenverhältnisse und/oder Inkubationszeiten gezielt zu verändern.

Gemäß einer weiteren Ausgestaltung der erfindungsgemäßen Sedimentationsvorrichtung ist der Zulauf im Wesentlichen auf der gleichen Höhe wie der Ablauf angeordnet. Hierbei wird eine besonders herstellungsfreundliche Konfiguration für die Sedimentationsvorrichtung realisiert. Alternativ dazu kann in einer weiteren Ausgestaltung der erfindungsgemäßen Sedimentationsvorrichtung die Höhenanordnung des Zulaufs von der Höhenanordnung des Ablaufs verschieden sein.

Gemäß dem nebengeordneten Patentanspruch der vorliegenden Erfindung wird eine Kartusche beansprucht, mit einer Trommel, welche zumindest eine Kammer aufweist, mit einer Verstelleinrichtung, welche dazu eingerichtet ist, die Trommel um deren Mittelachse zu drehen, sowie einer erfindungsgemäßen Sedimentationsvorrichtung, welche im Inneren der Trommel angeordnet ist.

Die vorliegende Kartusche schafft in vorteilhafter Weise ein autonomes System für das Separieren von Partikeln mittels Zentrifugation, bei dem diese in einer Trommel mit Hilfe der erfindungsgemäßen Sedimentationsvorrichtung durchgeführt wird, wobei aufgrund der geneigten Gestaltung des Sedimentationsmittels für die Sedimentationsvorrichtung in vorteilhafter Weise Material und Einbauraum eingespart werden können und gleichzeitig eine damit verbundene Effizienzsteigerung des gesamten Systems realisiert werden kann. Alternativ dazu kann bei gleichbleibendem Material und Einbauraum die Effizienz des Prozesses gesteigert werden. Dadurch kann eine kürzere Zentrifugationszeit erreicht oder niedrigere Zentrifugationsgeschwindigkeiten eingesetzt werden.

Des Weiteren können der Winkel und die Oberflächengröße des Sedimentationsmittels so gewählt sein, dass die zugehörige benötigte Zentrifugationsgeschwindigkeit nicht mit dem restlichen Zentrifugationsprotokoll der Kartusche interferiert, wodurch sichergestellt ist, dass es zu keiner unbeabsichtigten Wechselwirkung zwischen den Prozessen in den anderen Trommeln während des Schrittes der Zentrifugation der Substanz in der Sedimentationsvorrichtung kommt. Zusätzlich dazu erfolgt bei der vorliegenden Sedimentationsvorrichtung die Separation in nur einem einzigen Prozessschritt, so dass die Handhabung durch den Anwender und die Bedienung der Kartusche wesentlich vereinfacht werden.

Die vorliegende Sedimentationsvorrichtung kann aus demselben Material wie die Komponenten der Kartusche (zum Beispiel PP, PE) gebildet werden, wobei die Sedimentationsvorrichtung insbesondere als ein integriertes Bauteil in der Trommel integriert werden kann. Alternativ können andere Standardmaterialien, wie zum Beispiel Glas, Polymere (beispielsweise Thermoplaste, Duroplaste, Elastomere, etc.), Metalle, Keramiken, Steine, Papiermaterialien, etc. oder aber auch ganz andere Materialien für die Sedimentationsvorrichtung verwendet werden.

Vorzugsweise wird die Verstelleinrichtung durch einen Mechanismus gebildet, welcher auch als ,Kugelschreibermechanik' bezeichnet wird.

Gemäß einer weiteren Ausgestaltung der erfindungsgemäßen Kartusche wird zumindest einer von dem Zulauf oder dem Ablauf über ein zugehöriges Ventil gesteuert. Die Betätigung des Ventils kann dabei pneumatisch, hydraulisch, elektrisch, etc. erfolgen. Zusätzlich dazu kann/können auch ein Filter/mehrere Filter in die Kartusche bzw. die Sedimentationsvorrichtung eingebaut werden, welche(r) eine zusätzliche Reinigung der getrennten Fraktion durchführen kann/können.

Gemäß einer weiteren Ausgestaltung der erfindungsgemäßen Kartusche sind in der Trommel zumindest zwei Sedimentationsvorrichtungen vorgesehen, welche kaskadenförmig oder parallel angeordnet und fluidisch miteinander gekoppelt sind. So kann durch eine Kombination mehrerer Sedimentationsvorrichtungen eine Separation innerhalb einer Kartusche erfolgen, bei der aufgrund des verfügbaren Einbauraums in einer Trommel mittels eines einzigen Separationsprozess die gewünschte Separation andernfalls nicht vollständig durchgeführt werden könnte.

### Kurze Beschreibung der Zeichnungen

Ausführungsbeispiele der Erfindung sind in den Figuren der Zeichnung dargestellt und in der nachfolgenden Beschreibung näher erläutert.

Es zeigen:
- Figur 1: schematisch eine Ansicht von der Seite einer Sedimentationsvorrichtung gemäß einem ersten Ausführungsbeispiel der vorliegenden Erfindung;
- Figur 2: schematisch eine Ansicht von der Seite einer Sedimentationsvorrichtung gemäß einem zweiten Ausführungsbeispiel der vorliegenden Erfindung;
- Figur 3: schematisch eine Ansicht von der Seite einer Sedimentationsvorrichtung gemäß einem dritten Ausführungsbeispiel der vorliegenden Erfindung;
- Figur 4: schematisch eine Schnittansicht einer Kartusche mit einer Sedimentationsvorrichtung gemäß einem vierten Ausführungsbeispiel der vorliegenden Erfindung;
- Figur 5: schematisch eine Schnittansicht einer Kartusche mit einer Sedimentationsvorrichtung gemäß einem fünften Ausführungsbeispiel der vorliegenden Erfindung;
- Figur 6: schematisch eine Schnittansicht einer Kartusche mit einer Sedimentationsvorrichtung gemäß einem sechsten Ausführungsbeispiel der vorliegenden Erfindung;
- Figur 7: schematisch eine Schnittansicht einer Kartusche mit einer Sedimentationsvorrichtung gemäß einem siebten Ausführungsbeispiel der vorliegenden Erfindung;
- Figur 8: schematisch eine Schnittansicht einer Kartusche mit einer Sedimentationsvorrichtung gemäß einem achten Ausführungsbeispiel der vorliegenden Erfindung;
- Figur 9: schematisch eine Schnittansicht einer Kartusche mit einer Sedimentationsvorrichtung gemäß einem neunten Ausführungsbeispiel der vorliegenden Erfindung; und
- Figur 10: schematisch eine Schnittansicht einer Kartusche mit einer Sedimentationsvorrichtung gemäß einem zehnten Ausführungsbeispiel der vorliegenden Erfindung.

In den Figuren bezeichnen gleiche Bezugszeichen gleiche oder funktionsgleiche Elemente, soweit nichts Gegenteiliges angegeben ist.

Die folgenden Ausführungen gelten für sämtliche der nachfolgend beschriebenen Ausführungsformen der vorliegenden Sedimentationsvorrichtung und somit wird bei der Verwendung der bestimmten Form eines Merkmals in den nachfolgenden Ausführungsformen auf die zugehörige folgende allgemeine Offenbarung dieses Merkmals verwiesen.

Dabei weist eine Sedimentationsvorrichtung 100, welche mit einer Kartusche (nicht dargestellt) mit einer Längsachse (nicht dargestellt) koppelbar ist, einen Zulauf 10, eine Sedimentationskammer 20, welche mit dem Zulauf 10 gekoppelt ist und ein Sedimentationsmittel 30 aufweist, welches in Bezug auf die Längsachse der Kartusche zumindest abschnittsweise um einen vorbestimmten Winkel geneigt ist, und einen Ablauf 40 auf, welcher mit der Sedimentationskammer 20 gekoppelt ist. Der vorbestimmte Winkel beträgt zwischen 15 und 80 Grad, besonders bevorzugt zwischen 20 und 70 Grad.

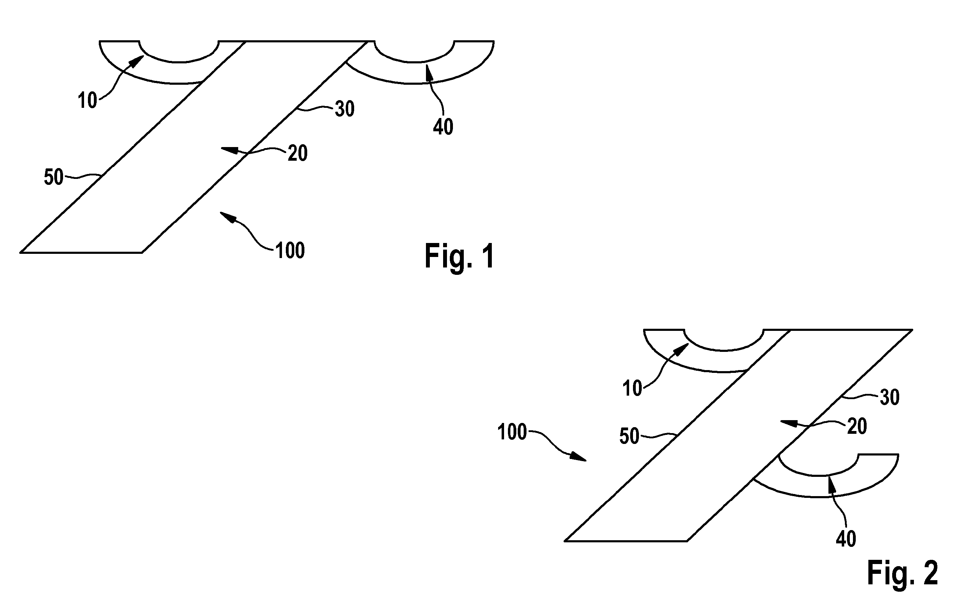

Figur 1 zeigt schematisch eine Ansicht von der Seite einer Sedimentationsvorrichtung 100 gemäß einem ersten Ausführungsbeispiel der vorliegenden Erfindung.

Bei einer Rotation einer Sedimentationskammer 20 um die Rotationsachse, beispielsweise mit einer Rotationsgeschwindigkeit ώ, wird Flüssigkeit, beispielsweise eines Volumens V₀, mittels Zentrifugalkraft über den in radialer, vom Drehzentrum wegweisender r-Richtung ansteigenden Zulauf 10 mit einer Flussrate I in die Sedimentationskammer 20 geleitet. Die Flussrate I ändert sich einerseits mit dem Quadrat der Drehfrequenz ω und mit dem radialen ,Gefälle', also in Zylinderkoordinaten ausgedrückt, dem radialen Anstieg Δr > 0 pro Weglänge Δs > 0 in Flussrichtung. Durch die Zentrifugalkraft wird der Einlassstrom entlang der einem Ablauf 40 gegenüberliegenden Wand der Sedimentationskammer 20 gezwungen, so dass ein direkter Fluss des noch nicht oder noch nicht vollständig sedimentierten Einlassstroms in den Ablauf 40 verhindert wird. Während über den Ablauf 40 noch partikelfreier Überstand aus der Sedimentationskammer 20 entfernt wird, kann über den Zulauf 10 noch Flüssigkeit in die Sedimentationskammer 20 eingeführt werden. In der Sedimentationskammer 20 findet dabei weiterhin Sedimentation statt. Im Endzustand, wenn keine Flüssigkeit mehr in die Sedimentationskammer 20 eingefüllt wird, reißt der durch den Ablauf 40 abgeleitete Fluss des partikelfreien Überstands ab, wenn dem Zulauf 10 keine Suspension mehr zugeführt wird und der Ablauf 40 in Kommunikation mit einem Umgebungsgas (zum Beispiel Luft) gelangt. Die Anordnung des Ablaufs 40 bezüglich der Sedimentationskammer 20 bestimmt somit in entscheidender Weise das Totvolumen der Kanalstruktur in der Sedimentationskammer 20, das heißt das Medienvolumen, welches nach der Zentrifugation im System zurück bleibt. Bei bekanntem Volumen der Suspension, die in die Sedimentationskammer 20 eingeführt wird, und bei bekanntem Totvolumen kann ein bekanntes Volumen über den Ablauf 40 ausgegeben werden. Grundsätzlich gilt, dass die Sedimentationsvorrichtung 100 auch mehrere Zuläufe und/oder Abläufe (nicht dargestellt) aufweisen kann.

Die Sedimentationskammer 20 stellt im Betrieb einen rotierenden Körper dar. Die Sedimentationskammer 20 weist ein Sedimentationsmittel 30 auf, welches in Bezug auf die Längsachse der Kartusche (nicht dargestellt) zumindest abschnittsweise um einen vorbestimmten Winkel geneigt ist. Das Sedimentationsmittel 30 ist als eine geneigte Ebene 50 ausgebildet. Der vorbestimmte Winkel beträgt zwischen 15 und 80 Grad, besonders bevorzugt zwischen 20 und 70 Grad.

Figur 1 zeigt ein Ausführungsbeispiel, bei dem der Ablauf 40 auf der gleichen Höhe wie der Zulauf 10 angeordnet ist.

Figur 2 zeigt schematisch eine Ansicht von der Seite einer Sedimentationsvorrichtung 100 gemäß einem zweiten Ausführungsbeispiel der vorliegenden Erfindung, deren Aufbau im Hinblick auf die Sedimentationskammer 20 identisch mit dem ersten Ausführungsbeispiel ist. Somit unterscheidet sich die Sedimentationsvorrichtung 100 gemäß Figur 2 von derjenigen gemäß Figur 1 dadurch, dass die Höhe des Zulaufs 10 von der Höhe des Ablaufs 40 verschieden ist, hier ist insbesondere der Zulauf 10 oberhalb von dem Ablauf 40 angeordnet.

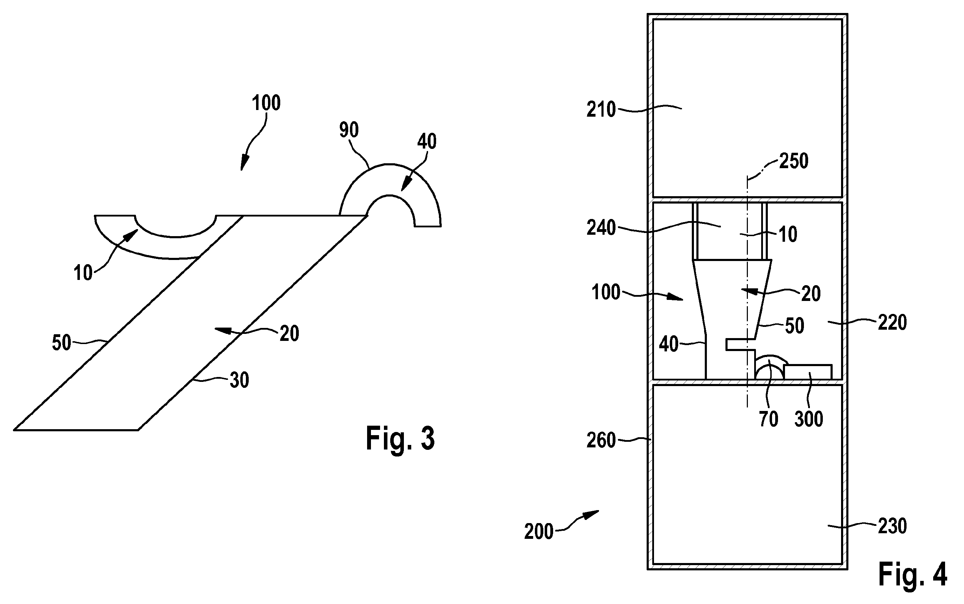

Figur 3 zeigt schematisch eine Ansicht von der Seite einer Sedimentationsvorrichtung 100 gemäß einem dritten Ausführungsbeispiel der vorliegenden Erfindung, deren Aufbau im Hinblick auf die Sedimentationskammer 20 identisch mit dem ersten Ausführungsbeispiel ist. Somit unterscheidet sich die Sedimentationsvorrichtung 100 gemäß Figur 3 von derjenigen gemäß Figur 1 dadurch, dass der Ablauf 40 in der Art eines gebogenen Kanals 90 ausgebildet ist, dessen eines Ende in die Sedimentationskammer 20 hineinragt und dessen freies Ende außerhalb der Sedimentationskammer 20 angeordnet ist. Bei diesem Ausführungsbeispiel saugt die zentrifugal getriebene Strömung am Ablauf 40 so lange an der Sedimentationskammer 20, wie der Füllstand im Ablauf radial weiter außen als der Füllstand der Sedimentationskammer 20 liegt und wie kein Umgebungsgas an die Strömung im Ablaufbereich gelangen kann. Dieses Absaugen kann die abgeleitete Flüssigkeitsmenge wesentlich beeinflussen und kann reproduzierbar erfolgen. Alternativ kann in dem Bereich, in dem der Ablauf 40 in die Sedimentationskammer 20 mündet, ein Zugang zum Umgebungsgas vorgesehen sein, so dass ein Saugen aus der Sedimentationskammer 20 nach Beendigung einer Suspensionszuführung nicht stattfindet.

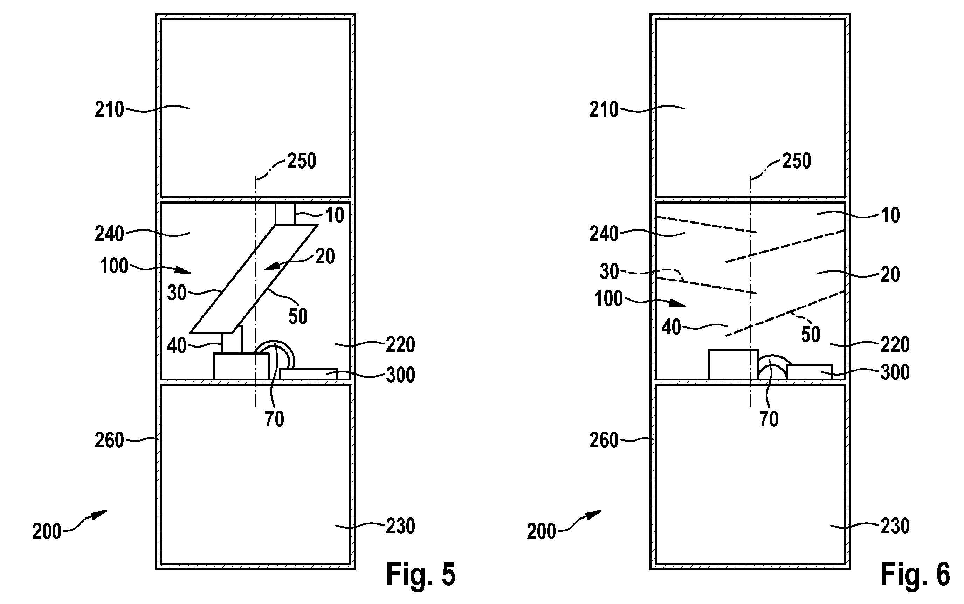

Figur 4 zeigt schematisch eine Schnittansicht einer Kartusche 200 mit einer Sedimentationsvorrichtung 100 gemäß einem vierten Ausführungsbeispiel der vorliegenden Erfindung. Zunächst soll der allgemeine Aufbau der Kartusche 200 beschrieben werden, welcher für die nachfolgenden Ausführungsbeispiele jeweils identisch ist, wobei sich in den jeweiligen nachfolgenden Ausführungsbeispielen Modifikationen der Sedimentationsvorrichtung 100 im Inneren der Kartusche 200 finden. Deshalb wird in der Beschreibung der Ausführungsbeispiele gemäß Figuren 5 bis 10 jeweils nur noch auf die Konfiguration der jeweiligen Sedimentationsvorrichtung 100 detailliert eingegangen werden.

Die Kartusche 200 weist einen Kartuschenkörper 260 auf, welcher eine im Wesentlichen hohlzylindrische Form aufweist, insbesondere in der Form eines Röhrchens, wobei ein oberes Ende offen ist und ein unteres Ende geschlossen ist. Je nach Art der Verwendung der Kartusche 200 kann das untere Ende eine konische Gestaltung aufweisen. Beispielsweise kann der Kartuschenkörper 260 als ein 5 bis 100 mL, insbesondere 50 mL, Zentrifugenröhrchen, 1.5 mL oder 2 mL Eppendorfröhrchen oder alternativ als eine Mikrotiterplatte (z.B. 20 µL pro Kavität) ausgebildet sein.

Im Inneren des Kartuschenkörpers 260 sind drei Trommeln 210, 220 und 230 angeordnet, welche jeweils um eine Mittelachse 250 gedreht werden können. Figur 4 zeigt die Trommeln 210, 220, 230 für die Kartusche 200 in der Art eines Drehrevolvers. Die Trommeln 210, 220, 230 sind dabei ein im Wesentlichen dünnwandiger Behälter, der in seinem Innenbereich eine Kammer 240 zur Aufnahme einer Komponente aufweist, beispielsweise eine zu untersuchende biologische Probe einer Person oder eine beliebige chemische Substanz.

Im Bereich der äußeren Umfangsfläche der Trommel 220 sind regelmäßig beabstandet eine Vielzahl von Zähnen (nicht dargestellt) einer Verstelleinrichtung (nicht dargestellt) angeordnet, welche sich jeweils entlang der gesamten Höhe der Trommel 220 erstrecken. Die Unterseite der Zähne ist bündig mit der Unterseite der Kammer 240 ausgebildet. Die Zähne ragen jeweils um eine vorbestimmte Höhe über die Höhe der Trommel 220 hinaus, wobei das freie Ende der Zähne jeweils in Form einer Schräge (nicht dargestellt) ausgebildet ist. Im Betrieb können die Trommeln 210, 220, 230 um eine Mittelachse 250, welche identisch mit der Mittelachse der Kartusche (nicht dargestellt) ist, gedreht werden. Im Inneren der Kartusche 200 wird durch die an der Trommel 220 ausgebildeten Zähne und der am inneren Umfangsbereich des Kartuschenkörpers 260 ausgebildete Zähne die Verstelleinrichtung gebildet, welche bewirkt, dass sich bei der Betätigung der Verstelleinrichtung die Trommel 220 gegenüber dem Kartuschenkörper 260 der Kartusche 200 in einer vorbestimmten Richtung um einen vorbestimmten Winkel dreht (,Betätigung der Kugelschreibermechanik').

Im Inneren der Trommel 220 ist die Sedimentationsvorrichtung 100 angeordnet, welche einen Zulauf 10, eine um eine Rotationsachse (nicht dargestellt) rotierbare Sedimentationskammer 20, welche mit dem Zulauf 10 gekoppelt ist und ein Sedimentationsmittel 30 aufweist, welches als eine geneigte Ebene 50 (mit einem vorbestimmten Neigungswinkel des Sedimentationsmittels 30 in Bezug auf die Längsachse der Kartusche, wobei der vorbestimmte Neigungswinkel zwischen 15 und 80 Grad beträgt, besonders bevorzugt zwischen 20 und 70 Grad beträgt) ausgebildet ist, und einen Ablauf 40 aufweist, welcher mit der Sedimentationskammer 20 gekoppelt ist. Der Ablauf 40 wiederum ist mit einem Siphon 70 fluidisch gekoppelt, so dass eine durch die Sedimentationsvorrichtung 100 abgetrennte Substanz in einen weiteren Behälter 300 überführt werden kann. Das Sedimentationsmittel 30 ist als die geneigte Ebene 50 ausgebildet, welche gleichzeitig die Wandung der Sedimentationskammer 20 bildet, wobei die Sedimentationskammer 20 die Gestalt eines Kegelstumpfs aufweist. Die Anordnung der Sedimentationsvorrichtung 100 ist nicht auf die Trommel 220 beschränkt, sondern kann je nach Anwendungsfall in jeder der Trommeln 210, 220, 230 angeordnet sein. Des Weiteren kann auch jede der Trommeln 210, 220, 230 jeweils eine Sedimentationsvorrichtung 100 aufweisen, sofern dies erforderlich sein sollte. Die Sedimentationsvorrichtung 100 ist ortsfest in Bezug auf die Trommel 220, was sowohl für die Ruhekonfiguration der Kartusche 200 als auch für den Betrieb der Kartusche 200 gilt.

Der Kartuschenkörper 260 und die Trommel(n) 210, 220, 230 können aus demselben oder unterschiedlichen Polymeren hergestellt sein. Bei dem einen oder mehreren Polymeren handelt es sich insbesondere um Thermoplaste, Elastomere oder thermoplastische Elastomere. Beispiele sind Cyclo-olefin Polymer (COP), Cyclo-olefin Copolymer (COC), Polycarbonate (PC), Polyamide (PA), Polyurethane (PU), Polypropylen (PP), Polyethylene terephthalate (PET) oder Poly(methyl methacrylate) (PMMA). Die vorliegende Sedimentationsvorrichtung 100 kann aus demselben Material wie die Komponenten der Kartusche 200 gebildet werden, wobei die Sedimentationsvorrichtung 100 insbesondere als ein integriertes Bauteil in der Trommel 220 integriert werden kann. Alternativ können andere Standardmaterialien, wie zum Beispiel Glas, Polymere (beispielsweise Thermoplaste, Duroplaste, Elastomere, etc.), Metalle, Keramiken, Steine, Papiermaterialien, etc. oder aber auch ganz andere Materialien für die Sedimentationsvorrichtung 100 verwendet werden.

Die Figur 5 zeigt schematisch eine Schnittansicht einer Kartusche 200 mit einer Sedimentationsvorrichtung 100 gemäß einem fünften Ausführungsbeispiel der vorliegenden Erfindung, in welchem drei Trommeln 210, 220, 230 im Inneren des Kartuschenkörpers 260 vorgesehen sind, welche im Betrieb jeweils um die Mittelachse 250 drehbar sind. Die Sedimentationsvorrichtung 100 weist einen Zulauf 10, eine um eine Rotationsachse (nicht dargestellt) rotierbare Sedimentationskammer 20, welche mit dem Zulauf 10 gekoppelt ist und ein Sedimentationsmittel 30 aufweist, welches als eine geneigte Ebene 50 mit einem vorbestimmten Neigungswinkel des Sedimentationsmittels 30 in Bezug auf die Längsachse der Kartusche, wobei der vorbestimmte Neigungswinkel zwischen 15 und 80 Grad beträgt, besonders bevorzugt zwischen 20 und 70 Grad beträgt ausgebildet ist, und einen Ablauf 40 aufweist, welcher mit der Sedimentationskammer 20 gekoppelt ist. Die Sedimentationskammer 20 weist die Gestalt eines schiefen Zylinders auf, dessen Sedimentationsmittel 30 als eine geneigte Ebene 50 ausgebildet ist, welche gleichzeitig die Wandung der Sedimentationskammer 20 bildet. Der Ablauf 40 ist ebenfalls mit einem Siphon 70 fluidisch gekoppelt, so dass eine durch die Sedimentationsvorrichtung 100 abgetrennte Substanz in einen weiteren Behälter 300 überführt werden kann.

Figur 6 zeigt schematisch eine Schnittansicht einer Kartusche 200 mit einer Sedimentationsvorrichtung 100 gemäß einem sechsten Ausführungsbeispiel der vorliegenden Erfindung, in welchem drei Trommeln 210, 220, 230 im Inneren des Kartuschenkörpers 260 vorgesehen sind, welche im Betrieb jeweils um die Mittelachse 250 drehbar sind. Die Sedimentationsvorrichtung 100 weist einen Zulauf 10, eine um eine Rotationsachse (nicht dargestellt) rotierbare Sedimentationskammer 20, welche mit dem Zulauf 10 gekoppelt ist und ein Sedimentationsmittel 30 aufweist, welches als eine Vielzahl von beabstandet angeordneten geneigten Ebenen 50 (mit einem vorbestimmten Neigungswinkel des Sedimentationsmittels 30 in Bezug auf die Längsachse der Kartusche, wobei der vorbestimmte Neigungswinkel zwischen 15 und 80 Grad beträgt, besonders bevorzugt zwischen 20 und 70 Grad beträgt) ausgebildet ist, und einen Ablauf 40 aufweist, welcher mit der Sedimentationskammer 20 gekoppelt ist. Die Sedimentationskammer 20 weist die Gestalt eines Zylinders auf, welcher sich über eine vorbestimme Höhe der Kammer 240 der Trommel 220 erstreckt. Die geneigten Ebenen 50 des Sedimentationsmittel 30 sind mit der Wand der Trommel 220 verbunden, und sind ausgehend von der Wand der Trommel 220 jeweils in Richtung zu dem unteren Ende der Trommel 220 hin geneigt. Die geneigten Ebenen 50 erstrecken sich ausgehend von der Wand der Trommel 220 in Richtung zu der Mittelachse 250 bis zu einer vorbestimmen Länge, die bis zu dem Bereich der Mittelachse 250 reichen kann und/oder über den Bereich der Mittelachse 250 hinaus. Der Ablauf 40 ist ebenfalls mit einem Siphon 70 fluidisch gekoppelt, so dass eine durch die Sedimentationsvorrichtung 100 abgetrennte Substanz in einen weiteren Behälter 300 überführt werden kann.

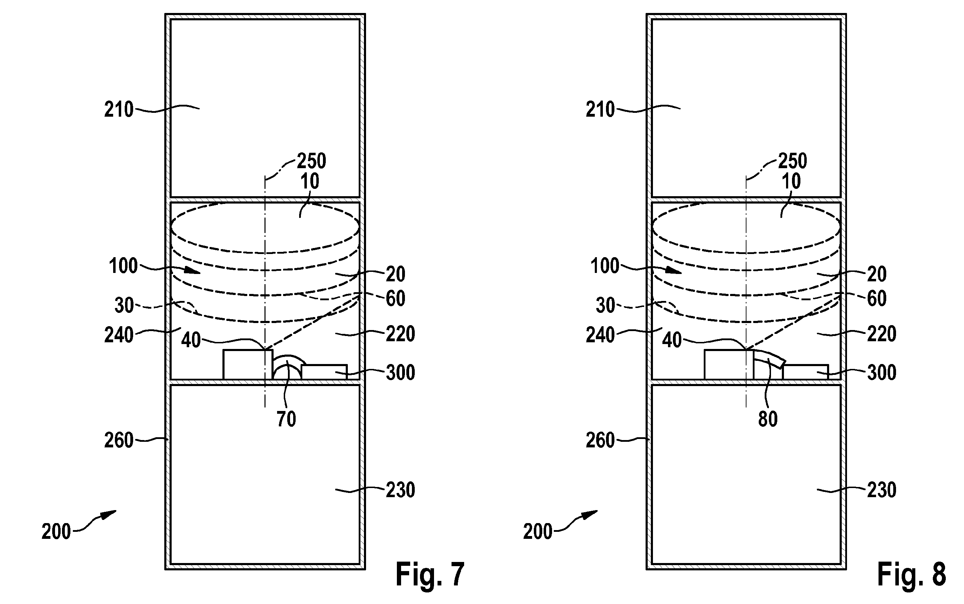

Figur 7 zeigt schematisch eine Schnittansicht einer Kartusche 200 mit einer Sedimentationsvorrichtung 100 gemäß einem siebten Ausführungsbeispiel der vorliegenden Erfindung, in welchem drei Trommeln 210, 220, 230 im Inneren des Kartuschenkörpers 260 vorgesehen sind, welche im Betrieb jeweils um die Mittelachse 250 drehbar sind. Die Sedimentationsvorrichtung 100 weist einen Zulauf 10, eine um eine Rotationsachse (nicht dargestellt) rotierbare Sedimentationskammer 20, welche mit dem Zulauf 10 gekoppelt ist und ein Sedimentationsmittel 30 aufweist, welches als eine Spirale 60 ausgebildet ist, und einen Ablauf 40 aufweist, welcher mit der Sedimentationskammer 20 gekoppelt ist. Die Sedimentationskammer 20 weist die Gestalt eines Zylinders auf, welcher sich über eine vorbestimme Höhe der Kammer 240 der Trommel 220 erstreckt.

Die Spirale 60 des Sedimentationsmittel 30 ist mit der Wand der Trommel 220 verbunden, und weist Abschnitte zur Führung einer Substanz auf, welche abschnittsweise in der Form einer geneigten Ebene (mit einem vorbestimmten Neigungswinkel des Sedimentationsmittels 30 in Bezug auf die Längsachse der Kartusche, wobei der vorbestimmte Neigungswinkel zwischen 15 und 80 Grad beträgt, besonders bevorzugt zwischen 20 und 70 Grad beträgt) und/oder eines Strömungskanals ausgebildet sein können. Die Spirale 60 erstreckt sich ausgehend von der Wand der Trommel 220 an einem oberen Ende der Trommel 220 in Richtung zu dem unteren Ende der Trommel 220 bis zu einer vorbestimmen Höhe, wobei der äußere Umfangsbereich der Spirale 60 innerhalb der Sedimentationskammer 20 stets im Kontakt mit der Wand der Trommel 220 ist. Der Ablauf 40 ist ebenfalls mit einem Siphon 70 fluidisch gekoppelt, so dass eine durch die Sedimentationsvorrichtung 100 abgetrennte Substanz in einen weiteren Behälter 300 überführt werden kann.

Figur 8 zeigt schematisch eine Schnittansicht einer Kartusche 200 mit einer Sedimentationsvorrichtung 100 gemäß einem achten Ausführungsbeispiel der vorliegenden Erfindung, in welchem drei Trommeln 210, 220, 230 im Inneren des Kartuschenkörpers 260 vorgesehen sind, welche im Betrieb jeweils um die Mittelachse 250 drehbar sind. Die Sedimentationsvorrichtung 100 ist dabei im Wesentlichen identisch mit dem siebten Ausführungsbeispiel, wobei der Ablauf 40 mit einem Überlaufkanal 80 fluidisch gekoppelt ist, so dass eine durch die Sedimentationsvorrichtung 100 abgetrennte Substanz in einen weiteren Behälter 300 überführt werden kann.

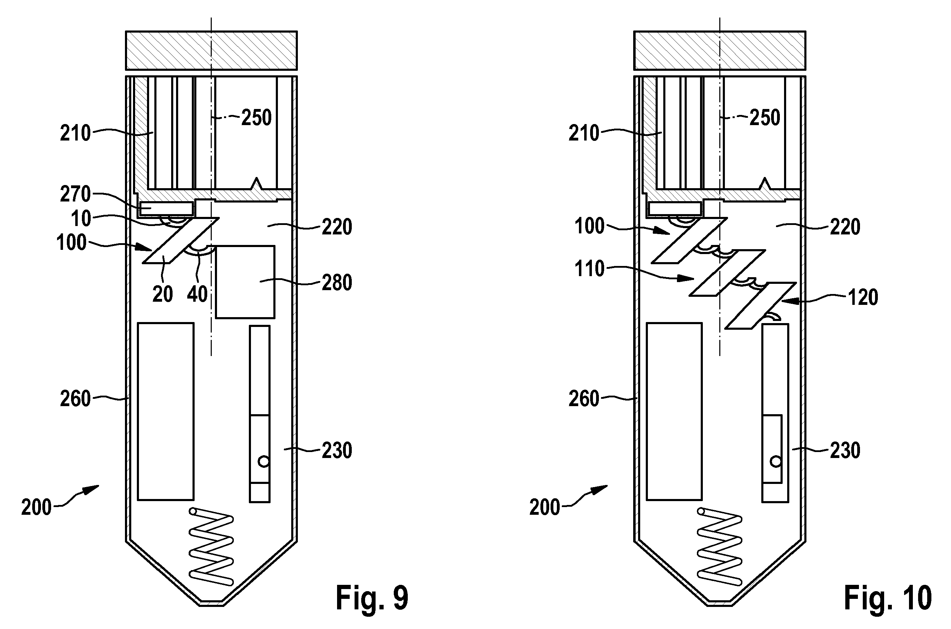

Figur 9 zeigt schematisch eine Schnittansicht einer Kartusche 200 mit einer Sedimentationsvorrichtung 100 gemäß einem neunten Ausführungsbeispiel der vorliegenden Erfindung, in welchem drei Trommeln 210, 220, 230 im Inneren des Kartuschenkörpers 260 vorgesehen sind, welche im Betrieb jeweils um die Mittelachse 250 drehbar sind. Die Sedimentationsvorrichtung 100 ist dabei im Inneren der Trommel 220 angeordnet und weist im Wesentlichen diejenige Konfiguration gemäß dem zweiten Ausführungsbeispiel von Figur 2 auf. In der Trommel 220 sind eine erste Unterkammer 270 und eine zweite Unterkammer 280 angeordnet, welche jeweils zur Aufnahme einer Substanz vorgesehen sind. Der Zulauf 10 der Sedimentationsvorrichtung 100 ist mit der ersten Unterkammer 270 fluidisch gekoppelt, wobei die erste Unterkammer 270 oberhalb von dem Zulauf 10 angeordnet ist. Der Ablauf 40 der Sedimentationsvorrichtung 100 ist mit der zweiten Unterkammer 280 fluidisch gekoppelt, wobei die zweite Unterkammer 280 unterhalb von dem Ablauf 10 angeordnet ist. Somit ist die Separationskammer 20 der Sedimentationsvorrichtung 100 zwischen den beiden Unterkammern 270, 280 angeordnet.

Figur 10 zeigt schematisch eine Schnittansicht einer Kartusche 200 mit einer Sedimentationsvorrichtung 100 gemäß einem zehnten Ausführungsbeispiel der vorliegenden Erfindung, in welchem drei Trommeln 210, 220, 230 im Inneren des Kartuschenkörpers 260 vorgesehen sind, welche im Betrieb jeweils um die Mittelachse 250 drehbar sind. Im Inneren der Trommel 220 sind drei Sedimentationsvorrichtungen 100, 110, 120 angeordnet, welche jeweils im Wesentlichen diejenige Konfiguration gemäß dem zweiten Ausführungsbeispiel von Figur 2 aufweisen. Die

Sedimentationsvorrichtungen 100, 110, 120 sind in Reihe angeordnet. Sie können auch kaskadenförmig und/oder parallel angeordnet sein. Die Sedimentationsvorrichtungen 100, 110, 120 sind dabei untereinander fluidisch gekoppelt.

Obwohl die Erfindung vorliegend anhand bevorzugter Ausführungsbeispiele beschrieben wurde, ist sie darauf keineswegs beschränkt, sondern auf vielfältige Weise modifizierbar. Ferner wird darauf hingewiesen, dass "ein" vorliegend keine Vielzahl ausschließt.

## Patentansprüche

1. Sedimentationsvorrichtung (100), insbesondere für Partikel, welche mit einer Kartusche mit einer Längsachse koppelbar ist, mit:
- einem Zulauf (10),
- einer Sedimentationskammer (20), welche mit dem Zulauf (10) gekoppelt ist und ein Sedimentationsmittel (30) aufweist, welches in Bezug auf die Längsachse der Kartusche zumindest abschnittsweise um einen vorbestimmten Winkel geneigt ist, und
- einem Ablauf (40), welcher mit der Sedimentationskammer (20) gekoppelt ist.

2. Sedimentationsvorrichtung nach Anspruch 1, **dadurch gekennzeichnet, dass** das Sedimentationsmittel in der Art eines geneigten Kanals und/oder einer geneigten Ebene (50) ausgebildet ist.

3. Sedimentationsvorrichtung nach Anspruch 1, **dadurch gekennzeichnet, dass** das Sedimentationsmittel in der Art einer Spirale (60) ausgebildet ist.

4. Sedimentationsvorrichtung nach einem der vorhergehenden Ansprüche, **dadurch gekennzeichnet, dass** das Sedimentationsmittel (30) beweglich mit der Sedimentationskammer (20) gekoppelt ist.

5. Sedimentationsvorrichtung nach einem der vorhergehenden Ansprüche, **dadurch gekennzeichnet, dass** die Sedimentationskammer (20) in Abhängigkeit von der Drehzahl der Sedimentationsvorrichtung eine bestimmte Anordnung aufweist.

6. Sedimentationsvorrichtung nach einem der vorhergehenden Ansprüche, **dadurch gekennzeichnet, dass** das Zuführen, Abtrennen und Ausführen von Substanzen aus der Sedimentationskammer (20) jeweils mittels Zentrifugalkraft erfolgt.

7. Sedimentationsvorrichtung nach einem der vorhergehenden Ansprüche, **dadurch gekennzeichnet, dass** der Ablauf (40) mit einem Siphon (70) oder mit einem Überlaufkanal (80) gekoppelt ist.

8. Sedimentationsvorrichtung nach einem der vorhergehenden Ansprüche, **dadurch gekennzeichnet, dass** der Ablauf (40) in der Art eines gebogenen Kanals (90) ausgebildet ist, dessen eines Ende in die Sedimentationskammer (20) hineinragt und dessen freies Ende außerhalb der Sedimentationskammer (20) angeordnet ist.

9. Sedimentationsvorrichtung nach einem der Ansprüche 1 bis 8, **dadurch gekennzeichnet, dass** der Ablauf (40) in der Art eines verformbaren Schlauchs ausgebildet ist, welcher in Abhängigkeit von der Drehzahl der Sedimentationsvorrichtung in Richtung zu unterschiedlichen Kammern gerichtet ist, welche außerhalb der Sedimentationskammer (20) angeordnet sind.

10. Sedimentationsvorrichtung nach einem der Ansprüche 1 bis 7, **dadurch gekennzeichnet, dass** der Zulauf (10) und/oder der Ablauf (40) jeweils in der Art von mehreren Kanälen ausgebildet sind.

11. Sedimentationsvorrichtung nach einem der vorhergehenden Ansprüche, **dadurch gekennzeichnet, dass** der Zulauf (10) im Wesentlichen auf der gleichen Höhe wie der Ablauf (40) angeordnet ist.

12. Sedimentationsvorrichtung nach einem der Ansprüche 1 bis 11, **dadurch gekennzeichnet, dass** die Höhenanordnung des Zulaufs (10) von der Höhenanordnung des Ablaufs (40) verschieden ist.

13. Kartusche (200), aufweisend
eine Trommel (210), welche zumindest eine Kammer (240) aufweist,
eine Verstelleinrichtung, welche dazu eingerichtet ist, die Trommel (210) um deren Mittelachse (250) zu drehen,
eine Sedimentationsvorrichtung (100) nach einem der Ansprüche 1 bis 12, welche im Inneren der Trommel (210) angeordnet ist.

14. Kartusche nach Anspruch 13, **dadurch gekennzeichnet, dass** zumindest einer von dem Zulauf (10) oder dem Ablauf (40) über ein zugehöriges Ventil gesteuert wird.

15. Kartusche nach Anspruch 13 oder 14, **dadurch gekennzeichnet, dass** in der Trommel (210) zumindest zwei Sedimentationsvorrichtungen (100, 110) vorgesehen sind, welche kaskadenförmig oder parallel angeordnet und fluidisch miteinander gekoppelt sind.
